# EUROPEAN PATENT APPLICATION

(11) **EP 4 530 316 A1**
(43) Date of publication of application: **02.04.2025**
(21) Application number: 24200286.3
(22) Date of filing: 13.09.2024
(51) Int. Cl.: C08L 23/08, C08L 53/02, C08L 23/12

(54) **IMPACT MODIFIER COMPOSITIONS AND APPLICATIONS THEREOF**

(30) Priority: 28.09.2023 US 202363585994 P
(71) Applicant: Kraton Polymers Nederland B.V., 1322 CE Almere (NL)
(72) Inventor: Dharmarajan, Narayanaswami, Houston, Texas 77084 (US); Raghavendran, Venkat, Houston, Texas 77084 (US); Yan, Jiaqi, Houston, Texas 77084 (US); Truong, David, Houston, Texas 77084 (US)
(74) Representative: Henkel & Partner mbB

(57) **Abstract**

An impact modifier composition (IMC) is disclosed containing a polyolefin plastomer (POP) and a hydrogenated styrenic block copolymer (HSBC) represented by a general configuration selected from: S-S/EB, S-S/EB', S-S/EB-EB', S-S/EB'-EB, S-S/EB-S, S-S/EB'-S, S-EP-EB, S-EP-EB', S-EB-EB', S-EB'-EB, EB-S/EB-EB, EB'-S/EB-EB', EB-S/EB'-EB, and mixtures thereof. Prior to hydrogenation, each block S is a polymer block of a vinyl aromatic monomer, each block EB is a polybutadiene block of 1,3-butadiene monomer having a vinyl content of < 35 wt.%, each block EB' is a polybutadiene block of 1,3-butadiene monomer having a vinyl content of > 35 wt.%, each block EP is a polyisoprene block of isoprene monomer, and each block S/EB and S/EB', independently, is a copolymer block of a vinyl aromatic monomer and 1,3-butadiene monomer. The IMC can be used in thermoplastic polyolefin (TPO) compositions to improve impact resistance for various applications, including automobile parts.

## Description

### FIELD

The disclosure relates to impact modifier compositions, methods of preparation, and applications thereof.

### BACKGROUND

Copolymers of ethylene and higher α-olefins are a class of ethylene-based polyolefins that possess inherent crystallinity derived from the ethylene monomer. These copolymers are typically synthesized using metallocene-type catalysts. The higher α-olefin comonomers used in these copolymers can range from C₃ to C₂₀ and help to modify the polymer's properties. The incorporation of higher α-olefins in the polymer chain generally leads to a reduction in both the crystallinity and density of the resulting polymer. As a result, the density of the copolymer can vary significantly depending on the type and amount of comonomer incorporated.

Polyolefin plastomers (POPs) with a density > 0.885 g/cc can be synthesized using gas-phase processes and are used as impact modifiers in polypropylene compositions due to their compatibility and favorable properties. However, even with suitable POPs, challenges persist in enhancing the impact resistance of polypropylene compositions while maintaining a balance with other desired mechanical properties, such as stiffness and flexibility.

There is still a need for an impact modifier composition for use in polypropylene compositions for enhanced impact resistance and a good balance of other mechanical properties.

### SUMMARY

In one aspect, the disclosure relates to an impact modifier composition (IMC) comprises, consists essentially of, or consists of: (a) 10 to 90 wt.% of a polyolefin plastomer (POP) and (b) 10 to 90 wt.% of a hydrogenated styrenic block copolymer (HSBC) having a general configuration selected from: S-S/EB, S-S/EB', S-S/EB-EB', S-S/EB'-EB, S-S/EB-S, S-S/EB'-S, S-EP-EB, S-EP-EB', S-EB-EB', S-EB'-EB, EB-S/EB-EB, EB'-S/EB-EB', EB-S/EB'-EB, and mixtures thereof. The POP has a density of > 0.885 g/cc, measured according to ASTM D792 and a melt flow rate of 0.1 to 30 dg/min at 230°C with 2.16 kg load, measured according to ASTM D1238. Prior to hydrogenation, each block S is a polymer block of a vinyl aromatic monomer, each block EB is a polybutadiene block of 1,3-butadiene monomer having a vinyl content of < 35 wt.%, each block EB' is a polybutadiene block of 1,3-butadiene monomer having a vinyl content of > 35 wt.%, each block EP is a polyisoprene block of isoprene monomer, and each block S/EB and S/EB', independently, is a copolymer block of a vinyl aromatic monomer and 1,3-butadiene monomer. The HSBC has a polystyrene content of 3 to 40 wt.%.

In a second aspect, the POP has a long chain branching (LCB) of < 15 LCB/10⁶ carbons.

In a third aspect, the block S has a molecular weight (Mₚ) of 2 to 40 kg/mol.

In a fourth aspect, each block EB and EB' independently has a molecular weight (Mₚ) of 5 to 50 kg/mol; each block EP has a molecular weight (Mₚ) of 20 to 100 kg/mol; and each block S/EB and S/EB' independently has a molecular weight (Mₚ) of 20 to 100 kg/mol.

### DESCRIPTION

The following terms will be used throughout the specification.

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C. In another example, at least one of A and B means A only, B only, as well as A and B.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Polystyrene content" or PSC of a block copolymer refers to the weight % of polymerized vinyl aromatic monomers, e.g., styrene in the block copolymer, calculated by dividing the sum of molecular weight of all vinyl aromatic units by total molecular weight of the block copolymer. PSC can be determined using any suitable methodology such as proton nuclear magnetic resonance (NMR).

"Vinyl content" refers to the content of a conjugated diene monomer that is polymerized via 1,2-addition in the case of butadiene, or via 3,4-addition in the case of isoprene, resulting in a monosubstituted olefin, or vinyl group, adjacent to the polymer backbone. Vinyl content can be measured by proton nuclear magnetic resonance (NMR).

"Molecular weight" or M_{w} refers to the polystyrene equivalent molecular weight in kg/mol of a polymer block or a block copolymer. M_{w} can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. M_{w} of polymers measured using GPC so calibrated are polystyrene equivalent molecular weights or apparent molecular weights. M_{w} expressed herein is measured at the peak of the GPC trace and commonly referred to as polystyrene equivalent "peak molecular weight," designated as Mₚ.

"Long chain branching" or LCB refers to the presence of extended side chains or branches along a polymer backbone, expressed as number of LCBs per 1,000,000 carbons, LCB/10⁶ carbons, as measured using GPC and/or NMR techniques.

"Short chain branching" or SCB refers to the presence of shorter side chains or branches attached to a polymer backbone. These branches are composed of a smaller number of repeat units compared to the polymer backbone. SCB occurs when a comonomer, e.g., 1-butene, is copolymerized with the main olefin monomer e.g., ethylene. The comonomer units disrupt the regularity of the polymer backbone, introducing branches at relatively regular intervals. The main difference between LCB and SCB is that in LCB, long chain branches consists of multiple repeat units and are relatively longer, e.g., more than a few dozens (> 36) to several thousand repeat units in length. A few here means "3" as a unit. In contrast, in SCB, short chain branches are shorter in length or smaller number of repeat units, e.g., a few to a few dozens, e.g., 2, 5, 10, 20, 30, < 36 of repeat units. The SCB can be measured using GPC-IR method.

The disclosure relates to an impact modifier composition (IMC) consisting essentially of a hydrogenated styrenic block copolymer (HSBC) and a polyolefin plastomer (POP). The IMC can be used in a thermoplastic polyolefin (TPO) composition for improved impact resistance and a balance of transparency, high stiffness, tensile strength, and flow properties. The TPO composition can be utilized in applications including automobile parts.

(Hydrogenated Styrenic Block Copolymers (HSBC)): The HSBC has a general configuration selected from: S-S/EB, S-S/EB', S-S/EB-EB', S-S/EB'-EB, S-S/EB-S, S-S/EB'-S, S-EP-EB, S-EP-EB', S-EB-EB', S-EB'-EB, EB-S/EB-EB, EB'-S/EB-EB', EB-S/EB'-EB, and mixtures thereof. The HSBC is formed by hydrogenation of a styrenic block copolymer (SBC) precursor which is any of linear, branched, or radial block copolymer.

Prior to hydrogenation, block S is a polymer block of a vinyl aromatic monomer; block EB is a polybutadiene block of 1,3-butadiene monomer; block EB' is a polybutadiene block of 1,3-butadiene monomer, different from the block EB; block EP is a polyisoprene block of isoprene monomer; and each copolymer block S/EB and S/EB' is independently derived from a vinyl aromatic monomer and 1,3-butadiene monomer. After hydrogenation, each block EB, EB', and EP, independently, becomes ethylene/butylene (EB), ethylene/butylene (EB'), and ethylene/propylene (EP), respectively. The vinyl aromatic monomer can be introduced or copolymerized into the blocks, EB, EB', and EP by any order and in any distribution to form any of configurations as described.

In embodiments, the vinyl aromatic monomer is selected from the group consisting of styrene, (α) alpha-methylstyrene, methyl styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, ortho-substituted styrene, meta-substituted styrene, isomers of para-decylstyrene, isomers of para-dodecylstyrene, dimethyl styrene, halogenated styrene, methoxy styrene, acetoxy styrene, vinyl toluene, isomers of vinyl toluene, vinyl xylene, 4-vinylbiphenyl, vinyl naphthalene, vinyl anthracene, 1,1-diphenylethylene, and mixtures thereof.

In embodiments, block EB contains 1,3-butadiene monomer incorporated by 1,4-addition in an amount of 65 - 85, or 65 - 80, or 65 - 75, or 70 - 85 wt.%, based on total weight of the polymerized 1,3-butadiene monomer in the block EB, remainder 1,3-butadiene monomer incorporated by 1,2-addition.

In embodiments when the block EB' is present, the block EB' contains 1,3-butadiene monomer incorporated by 1,2-addition in an amount of 40 - 80, or 45 - 75, or 50 - 70, or 55 - 65 wt.%, based on total weight of the polymerized 1,3-butadiene monomer in the block EB', remainder 1,3-butadiene monomer incorporated by 1,4-addition.

In embodiments, block EB, prior to hydrogenation, has a vinyl content of < 35, or > 10, or 5 - 35, or 10 - 30, or 15 - 35, or 15 - 30, or 17 - 27 wt.%, based on total weight of the polymerized 1,3-butadiene monomer in the block EB.

In embodiments, block EB' before hydrogenation, has a vinyl content of > 35, or < 70, or 35 - 70, or 38 - 65, or 35 - 60, or 37 - 55, or 35 - 50 wt.%, based on total weight of the polymerized 1,3-butadiene monomer in the block EB'.

In embodiments, a vinyl content ratio of block EB and block EB' is from 1:10 to 10:1, or 1:8 to 8:1, or 1:5 to 5:1, or 1:3 to 3:1.

In embodiments, block S, block S in S/EB or block S in S/EB' independently has a hydrogenation level of < 30%, or < 20%, or < 10%, or < 5%, or > 0.1%. In embodiments, block EP, block EB, block EB', block EB in S/EB, and block EB' in S/EB', independently has a hydrogenation level of > 90%, or > 95%, or > 98%, or > 99%, or up to 100%. Hydrogenation level refers to the percentage of original unsaturated bonds which become saturated upon hydrogenation, which can be determined using UV-VIS spectrophotometry and / or proton NMR and / or via ozonolysis titration.

In embodiments, the HSBC has a polystyrene content (PSC) of 3 - 40, or 4 - 35, or 5 - 30, or 4 - 25, or 5 - 22, or > 5, or < 30 wt.%, based on total weight of the HSBC.

In embodiments, the HSBC has a coupling efficiency (CE) of > 60%, or > 65%, or > 70%, or 60 - 90%, or 65 - 85%.

In embodiments, the HSBC has a diblock content of > 5, or > 10, or 5 - 40, or 10 - 35 wt.%, based on total weight of the HSBC.

In embodiments, block S has a molecular weight (Mₚ) of 2 - 40, or 3 - 30, or 4-20, or 5 - 15, or 3 - 15, or 3 - 12, or > 2, or < 20 kg/mol.

In embodiments, each block EB and EB' independently has a molecular weight (Mₚ) of 5 - 50, or 10 - 40, or 15 - 35, or 5 - 35, or 15 - 30 kg/mol.

In embodiments, block EP has a molecular weight (Mₚ) of 20 - 100, or 25 - 80, or 30 - 70, or 40 - 60, or 45 - 60, or 20 - 60, or 40 - 100 kg/mol.

In embodiments, each block S/EB and S/EB' independently has a molecular weight (Mₚ) of 20 - 100, or 25 -80, or 30 - 70, or 20 - 60, or 30 - 75, or 35 - 100, or 15 - 55 kg/mol.

In embodiments, the HSBC has a molecular weight (Mₚ) of 30 - 300, or 40 - 250, or 50 - 200, or 30 - 150, or 35 - 120, or 40 - 100, or 50 - 110 kg/mol.

In embodiments, the HSBC has a melt flow rate (MFR) of > 0.5, or > 1, or > 3, or > 5, or 0.5 - 50, or 1 - 40, or 2 - 35, or 3 - 30, or 4 - 25, or 1 - 15 dg/min, at 230°C with 2.16 kg load, measured according to ASTM D1238.

In embodiments, the HSBC has a general configuration selected from: S-EP-EB, EB-S/EB'-EB, and mixtures thereof, having a vinyl content in block EB, prior to hydrogenation, of 10 - 30 wt.%; a vinyl content in block EB' (if present), prior to hydrogenation, of 35 - 50 wt.%; a PSC of 4 - 25 wt.%; a Mₚ of block S (if present) of 3 - 15 kg/mol; a Mₚ of each block EB and EB', independently, of 10 - 40 kg/mol; a Mₚ of block S/EB' (if present) of 20 - 60 kg/mol; a Mₚ of block EP (if present) of 40 - 60 kg/mol; a Mₚ of the block copolymer of 35 - 120 kg/mol; and a MFR of 1 - 15 dg/min, at 230°C/2.16 kg.

The HSBC can be prepared by first making a SBC precursor as disclosed in U.S. Patent No. 7,449,518. The SBC precursor can be prepared by anionic polymerization or by sequential (or successive) polymerization, at a temperature of -30 to 150°C, or 10 to 100°C, or 30 to 90°C. The polymerization is carried out in an inert atmosphere, e.g., nitrogen, or under pressure ranging from 0.5 to 65 bars. The polymerization generally requires < 12 hours, or from 5 minutes to 5 hours, depending on factors including temperature, concentration of monomer components, desired molecular weight of the polymer, etc. Obtained sequential block copolymer chains can be coupled with the coupling agent (if present).

The SBC precursor is then hydrogenated to obtain the HSBC using a hydrogenation process as disclosed in U.S. Patent No's. 3,670,054, and 3,700,633.

In embodiments, the HSBC is functionalized with at least one functional group, e.g., hydroxyl, amino, carboxyl, acid anhydride, epoxy, isocyanate, silane, silanol, and the like.

In embodiments, the HSBC is used in the IMC in amounts of 10 - 90, or 20 - 80, or 30 - 70, or 40 - 60 wt.%, based on total weight of the IMC.

(Polyolefin Plastomers (POPs)): In embodiments, the POP is an ethylene-α-olefin copolymer obtained by copolymerization of ethylene and at least one C₃-C₂₀ α-olefin with a metallocene-based catalyst. The POP contains ethylene in amounts of > 50, or > 60, or > 70, or > 80, or > 90, or > 95 wt.%, based on total weight of the POP. In embodiments, the POP contains ethylene in an amount of 65 - 95% and 5 - 35% of a linear α-olefin.

Examples of C₃-C₂₀ α-olefin include propylene, isobutylene, 1-butene, 1-hexene, 1-pentene, 4-methyl-1-pentene, 1-heptene, 1-octene, 1-nonene, 1-decene, 1-dodecene, 1-tetradecene, 1-hexadecene, 1-octadecene, 1-eicosene, and the like.

Examples of the POP include ethylene / propylene copolymer, ethylene / butene (EB) copolymers, ethylene / hexene-1 (EH) copolymers, ethylene / octene (EO) copolymers, ethylene / α-olefin / diene modified (EAODM) interpolymers (e.g., ethylene / propylene / diene modified (EPDM) interpolymers, ethylene / propylene / octene terpolymers, etc.), and the like. The POP further comprises C₄-C₁₈ diolefin and / or alkenylbenzene.

In embodiments, the POP has a density of > 0.885, or > 0.890, or 0.885 - 0.920, or 0.890 - 0.915, or 0.895 - 0.910, or 0.890 - 0.905, or < 0.920 g/cc, measured according to ASTM D792.

In embodiments, the POP has a melt flow rate (MFR) of 0.1 - 30, or 0.5 - 25, or 0.8 - 20, or 0.5 - 10, or 1 - 15, or 0.5 - 5, or > 0.5, or < 15 dg/min, at 230°C with 2.16 kg load, measured according to ASTM D1238.

In embodiments, POP has a long chain branching (LCB) in units of LCB/10⁶ carbons of < 15, or < 10, or < 5, or < 3, or < 2, or < 1, or 0.01 to 10, or 0.05 to 5, or 0.1 to 3, or 0.01 to 2, or 0.05 to 1.9, or 0.1 to 1.8, or 0.5 to 2, or 0.7 to 1.7, or 0.01 to 0.5, measured according to Janzen-Colby Plot method. The terms "10⁶ carbons" includes both backbone and branch carbons.

In embodiments, the POP is an ethylene-hexene copolymer comprising 65 - 95 wt.% of ethylene units, and 5 - 35 wt.% of hexene units; and the POP has a density of 0.895 - 0.910 g/cc, a MFR of 0.5 - 5 dg/min, and a long chain branching of < 2 LCB/10⁶ carbons.

In embodiments, the POP is made in a metallocene-catalyzed polymerization process, e.g., gas phase polymerization process. As used herein, the term "metallocene-catalyzed POP, "metallocene-produced POP," or "m-POP" refers to POP having a density and MFI properties described herein and being produced in the presence of a metallocene catalyst. A metallocene-catalyzed POP has measurable properties distinguishable from a POP having the same comonomers in the same weight percentages but produced from a different process, e.g., a conventional Ziegler-Natta polymerization process.

The gas-phase polymerization refers to polymerization of monomers in a fluidized bed. The POP can be formed by polymerizing alpha-olefins in the presence of a metallocene catalyst under reactive conditions in a gas-phase reactor having the fluidized bed and a fluidizing medium. In embodiments, the POP is obtained by polymerization in a single reactor. A variety of gas phase polymerization processes can be used, e.g., polymerization can be conducted in uncondensed or "dry" mode, condensed mode, or super-condensed mode.

In gas phase polymerization processes, the reactor temperature can be in the range of 30 - 140°C, or 60 - 120°C, or 65 - 110°C, or 70 - 105°C and pressure of 100 - 1000, or 150 - 600, or 200 - 500, or 250 - 400 psig.

Metallocene catalysts can be compounds having a Group 4, 5, or 6 transition metal (M), with a cyclopentadienyl (Cp) ligand or ligands which can be substituted, at least one non-cyclopentadienyl-derived ligand (X), and zero or one heteroatom-containing ligand (Y), the ligands being coordinated to M and corresponding in number to the valence thereof. The metallocene catalyst / precursors generally require activation with a suitable co-catalyst (referred to as an "activator"), in order to yield an "active metallocene catalyst", i.e., an organometallic complex with a vacant coordination site that can coordinate, insert, and polymerize olefins.

In embodiments, the POP obtained from the gas-phase polymerization process and using metallocene catalyst is characterized by a narrow composition distribution which relates to the uniformity of distribution of comonomer among the molecules of the polymer. Metallocene catalysts are known to incorporate comonomer very evenly among the polymer molecules they produce. The POP produced from the metallocene catalyst system can have a very narrow composition distribution, in that most of the polymer molecules will have roughly the same comonomer content, and within each molecule the comonomer will be randomly distributed.

In embodiments, the POP is used in amounts of 10 - 90, or 20 - 80, or 30 - 70, or 40 - 60 wt.%, based on total weight of the IMC.

(Impact Modifier Compositions (IMCs)): The IMC comprises, based on total weight of the IMC: 10 - 90 wt.% of a HSBC, and 10 - 90 wt.% of a POP; preferably, 20 - 80 wt.% HSBC, and 20 - 80 wt.% POP.

(Methods of Preparation of IMCs): The IMC can be prepared by using suitable amounts of components and dry blending, or dry blending and melt extruding into pellets. The dry blending and/or melt mixing can be carried out by single or twin-screw extruder.

In embodiments, components of the IMC in suitable amounts are added directly into a thermoplastic polyolefin (TPO) composition, without a need of pre-blending.

(Thermoplastic Polyolefin (TPO) Compositions): In embodiments, the TPO composition comprises: A) 60 - 95 wt.% of polypropylene, B) 5 - 40 wt.% of IMC, and C) up to 25 wt.% of at least an additive; preferably, A) 60 - 85 wt.% of polypropylene, B) 15 - 40 wt.% of IMC, and C) 0.1 to 10 wt.% of at least an additive, based on total weight of the TPO composition.

The IMC in embodiments is used in TPO compositions in amounts of 5 - 40, or 10 - 30, or 5 - 35, or 10 - 35, or 15 - 40 wt.%, based on total weight of the TPO composition.

(Polypropylene (PP)): The polypropylene used in the TPO composition can be any the polypropylene polymer made via any processes known in the art. The polypropylene can be obtained from virgin or recycled sources. In embodiments, a polypropylene blend is used in the TPO composition, e.g., a blend of polypropylene with a random ethylene or butene copolymer of polypropylene, or a crystalline random copolymer of ethylene and propylene combined with a rubbery ethylene-propylene copolymer. Polypropylene copolymers can be used, including copolymers of propylene with copolymerizable comonomers, e.g., ethylene, 1-butene, 1-pentene, 1-hexene, 1-octene, or one or more conjugated or non-conjugated dienes. The comonomer can be in the range of 0.05 - 40, or 0.5 - 30, or 1 - 20, or 5 - 30 wt.%, based on total weight the polypropylene copolymer.

In embodiments, the polypropylene is a heterophasic polymer composition comprising a propylene homopolymer matrix, or random copolymer matrix dispersed therein a propylene copolymer component with one or more ethylene or higher α-olefin comonomer(s). The random copolymer matrix comprises propylene monomer and at least one comonomer selected from the group consisting of ethylene, C₄-C₈ α-olefins, e.g., 1-butene, 1-pentene, 4-methyl-1-pentene, 1-hexene, I-heptene, 1-octene, and mixtures thereof.

The polypropylene can be bimodal or multimodal in view of the molecular weight. In embodiments, the polypropylene has a number average molecular weight (Mₙ) of 10 - 200, or 30 - 150, or 50 - 100, or 30 - 120, or 40 - 140 kg/mol. In embodiments, the polypropylene has a weight average molecular weight (M_{w}) of 50 - 2000, or 150 - 1500, or 200 - 1000, or 100 - 800, or 150 - 500, or 100 - 400 kg/mol.

In embodiments, the polypropylene has a melting temperature (Tₘ) of 100 - 180°C, or 110 - 170°C, or 120 - 160°C, or 125 - 150°C, measured by DSC per ASTM D3418.

In embodiments, the polypropylene has a crystallinity of 20 - 70%, or 25 - 65%, or 30 - 60%, or 35 - 55%, or > 35%, or > 40%, or > 50%, measured by differential scanning calorimetry (DSC) heat of fusion, according to ASTM F2625.

In embodiments, the polypropylene has a melt flow rate (MFR) of 5 - 50, or 10 - 45, or 5 - 40, or 10 - 40 dg/min, at 230°C with 2.16 kg load, measured according to ASTM D1238.

In embodiments, the polypropylene has a density of 0.890 - 0.920, or 0.895 - 0.915, or 0.895 - 0.910 g/cc, measured according to ASTM D792.

In embodiments, the polypropylene used in the TPO composition in amounts of 70 - 99, or 80 - 99, or 70 - 95, or 70 - 90, or 75 - 95 wt.%, based on total weight of the TPO composition.

(Optional Additives): The TPO composition further comprises additives selected from the group consisting of activators, curing agents, stabilizers, neutralizing agents, thickeners, coalescing agents, slip agents, release agents, antimicrobial agents, antioxidants, antiozonants, color change pH indicators, plasticizers, tackifiers, film forming additives, dyes, pigments, UV stabilizers, UV absorbers, catalysts, fillers, other resins, redox couples, fibers, flame retardants, viscosity modifiers, wetting agents, deaerators, toughening agents, adhesion promoters, colorants, heat stabilizers, lubricants, flow modifiers, drip retardants, antiblocking agents, antistatic agents, processing aids, stress-relief additives, blowing agents, weld line strength promoter, impact modifiers other than the IMC, and mixtures thereof.

Examples of fillers include sand, talc, dolomite, calcium carbonate, clay, silica, mica, wollastonite, feldspar, aluminum silicate, alumina, hydrated alumina, glass bead, glass microsphere, ceramic microsphere, thermoplastic microsphere, barite, wood flour, glass fibers, wood fibers, carbon fibers, and mixtures thereof. The filler can be surface treated before adding into the TPO composition.

In embodiments, the impact modifier other than the IMC includes ethylenepropylene-diene (EPDM) monomer, ethylene-propylene (EPM) monomer, ethylene-propylene rubber (EPR), elastomeric polyolefins (POE), copolymers and terpolymers based on ethylene and propylene, nitrile-butadiene rubber (NBR), isobutylene (IB), chlorinated rubber, chlorinated polyethylene (CM), isoprene, ethylene-butene, mixtures and derivatives thereof.

In embodiments, additives used in the TPO composition is in amounts of up to 25 wt.%, or < 30, or 0.1 - 10, or 1 - 10, or 0.1 - 5, or 1 - 5 wt.%, based on total weight of the TPO composition.

(Preparations of TPO Compositions): The TPO composition can be processed according to methods known in the art, with the components combined and blended by melt mixing / extruded into pellets, subsequently forming articles by known techniques, such as injection molding, overmolding, rotomolding, thermoforming, casting, extrusion, profile extrusion, and blow molding.

The TPO composition can be compounded by equipment including continuous single or twin-screw mixers. In embodiments, the TPO composition is prepared by dry blending process to obtain a dry blended TPO composition.

Compounding temperature of the TPO composition can be from 80 - 300°C, or 150 - 280°C, or 180 - 260°C, or 200 - 260°C. Various components of the final TPO composition can be added to and compounded with one another in any order, or simultaneously. In some embodiments, the additives are added as a pre-mixed masterbatch. Such masterbatches are commonly formed by dispersing the additives, either separately or together, in a small amount, e.g., > 0.1 and < 10 wt.%.

(Properties of TPO Compositions): When the HSBC is incorporated into an IMC as described above, the TPO composition with the IMC is characterized as having excellent balanced properties, e.g., flexibility, impact, stiffness, transparency, tensile strength, flow properties, anisotropy, etc.

In embodiments, the TPO composition has a Notched Izod impact at 21°C of 6.5 - 50, or 6.6 - 45, or 6.7 - 40, or 6.5 - 35, or > 6.5 kJ/m². In embodiments, the TPO composition has a Notched Izod impact at -21°C of 2.2 - 20, or 2.4 - 15, or 2.4 - 10, or > 2.2, or > 2.4 kJ/m². Measurements are per ASTM D256.

In embodiments, the TPO composition has a flexural strength of 25 - 50, or 28 - 45, or 30 - 40, or 25 - 40, or 30 - 45, or > 25 MPa, measured according to ASTM D790.

In embodiments, the TPO composition has a 1% secant modulus of 1050 - 1600, or 1060 - 1550, or 1070 - 1500, or 1050 - 1400, or > 1050 MPa, measured according to ASTM D790.

In embodiments, the TPO composition has a tensile strength at break of 10 - 40, or 12 - 35, or 10 - 30, or 11 - 25, or > 10 MPa, measured according to ASTM D638.

In embodiments, the TPO composition has an elongation at break of 350 - 800, or 360 - 770, or 370 - 750%, or > 350%, measured according to ASTM D638.

In embodiments, the TPO composition has at least one of the following balanced properties, as compared to a TPO composition in absence of the IMC:
at least 10% increase in an elongation at break and at least 2% increase in a Notched Izod Impact measured at 21°C; or
at least 10% increase in an elongation at break and at least 2% increase in a Notched Izod Impact measured at -21°C; or
at least 10% increase in an elongation at break and less than 20% reduction in a flexural strength; or
at least 10% increase in an elongation at break and less than 20% reduction in a Secant modulus at 1%.

(Applications of TPO Compositions): TPO compositions can be used for making various articles through injection blow molding, injection molding, extrusion blow molding, coextrusion molding, cast film extrusion, blown film extrusion, injection stretch blow molding, rotational molding, thermoforming, thermofusion, foam blow molding, pultrusion, calendaring, additive manufacturing, or other known processing methods.

The TPO composition can be used in piping, packaging applications, films, geo-membranes, roofing applications, pond liners, caps, and closures as well as core layers of a multilayer polyolefin sheet or film, containers, and household articles, medical molded bodies, and caps. The TPO composition can be used for automotive applications, e.g., interior trim, interior sheathing, door panels, instrument panels, fascia, lift gate, and consoles.

A hollow article can be formed from the TPO composition by either continuous extrusion blow molding or by intermittent extrusion blow molding. In embodiments, the hollow article includes bottles, containers, fuel tanks, drums etc. Other molded articles include furniture, signage, wheels, toys, gardening products and the like.

In embodiments, the TPO composition is used to prepare textile fibers which then used to form spun bond fiber, staple fiber, multi-fiber yarn, knit fabric, woven fabric, or nonwoven fabric.

### (Examples): The following examples are intended to be non-limiting.

The components used in examples include:
PP-1 is a polypropylene homopolymer having MFR of 20 dg/min at 230°C/2.16 kg and density of 0.900 g/cc, from Borealis.
POP-1 is an ethylene-hexene copolymer having density of 0.900 g/cc, MFR of 2.0 dg/min at 230°C/2.16 kg, and a long chain branching of 0.01 LCB/10⁶ carbons.

Composition details of various HSBCs are provided in table 1.

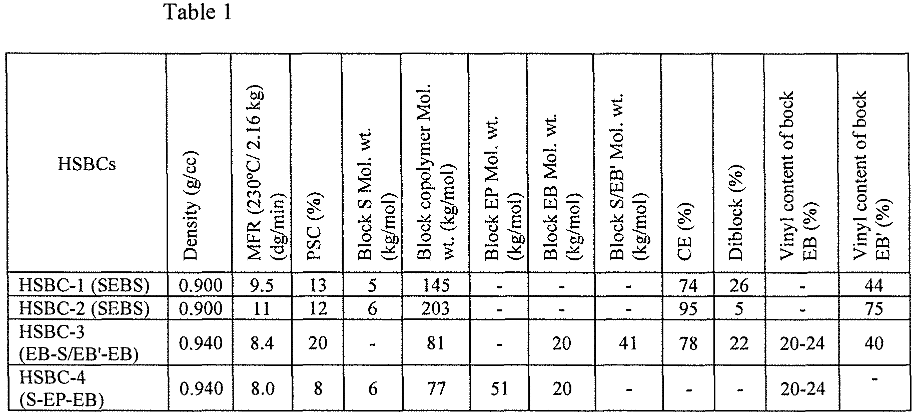

(Example 1): Preparation of IMCs. Components of IMCs in suitable amounts were dry blended to obtain various compositions as shown in table 2.

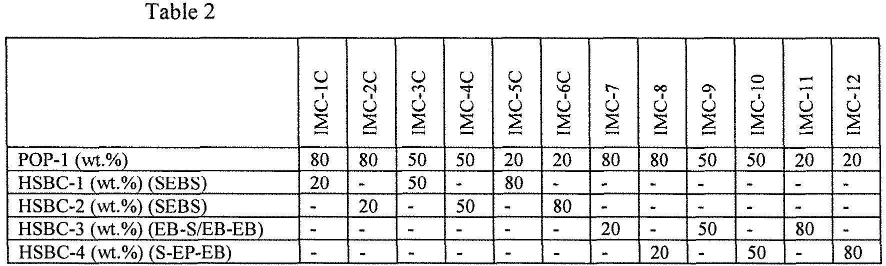

(Example 2): Preparation of TPO compositions. Components of TPO compositions in suitable amounts were compounded at 245°C in a micro compounder having twin screw extruder. After compounding, the composition in melt state was discharged directly from the micro compounder to an injection molded unit. The injection nozzle temperature was set at 237°C and the mold temperature was at 50°C. The injection pressure was ranging from 5 to 10 bar. Injection molded specimens were used for measurement of various properties. Details of TPO compositions and properties are presented in tables 3 and 4, respectively.

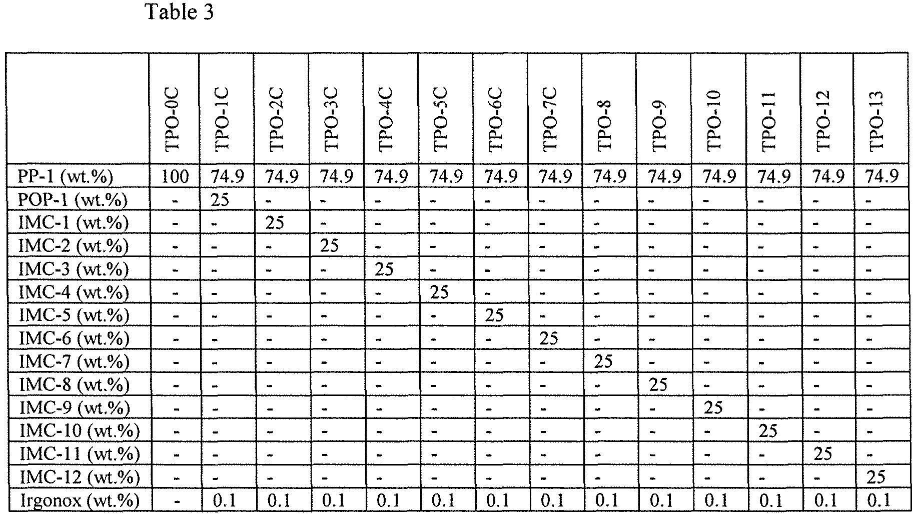

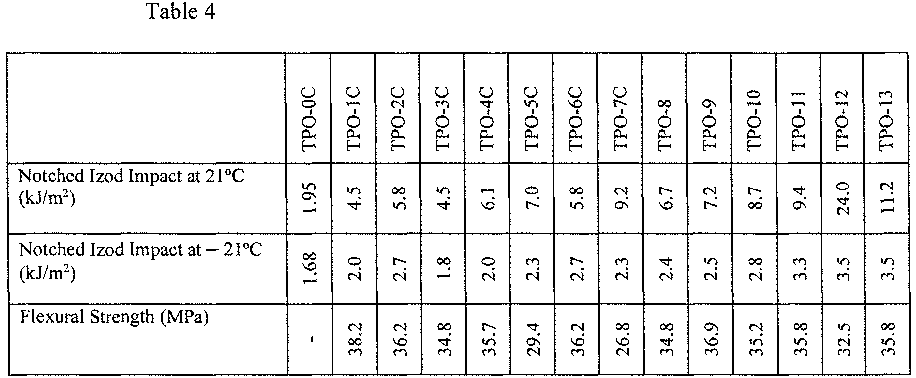

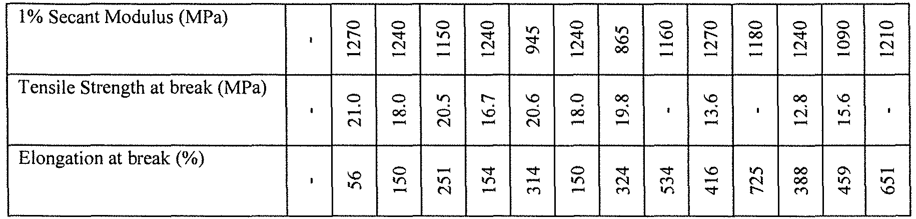

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. An impact modifier composition consisting essentially of:
(a) 10 to 90 wt.% of a polyolefin plastomer having a density of > 0.885 g/cc, measured according to ASTM D792, and a melt flow rate of 0.1 to 30 dg/min at 230°C with 2.16 kg load, measured according to ASTM D1238; and
(b) 10 to 90 wt.% of a hydrogenated styrenic block copolymer having a general configuration selected from: S-S/EB, S-S/EB', S-S/EB-EB', S-S/EB'-EB, S-S/EB-S, S-S/EB'-S, S-EP-EB, S-EP-EB', S-EB-EB', S-EB'-EB, EB-S/EB-EB, EB'-S/EB-EB', EB-S/EB'-EB, and mixtures thereof,
wherein prior to hydrogenation:
each block S is a polymer block of a vinyl aromatic monomer,
each block EB is a polybutadiene block of 1,3-butadiene monomer having a vinyl content of < 35 wt.%,
each block EB' is a polybutadiene block of 1,3-butadiene monomer having a vinyl content of > 35 wt.%,
each block EP is a polyisoprene block of isoprene monomer, and
each block S/EB and S/EB', independently, is a copolymer block of a vinyl aromatic monomer and 1,3-butadiene monomer,
wherein the hydrogenated styrenic block copolymer has a polystyrene content of 3 to 40 wt.%.

2. The impact modifier composition of claim 1, wherein the polyolefin plastomer has a long chain branching (LCB) of < 15 LCB/10⁶ carbons.

3. The impact modifier composition of claim 1, wherein the block S has a molecular weight (Mₚ) of 2 to 40 kg/mol.

4. The impact modifier composition of any of claims 1-3, wherein
each block EB and EB' independently has a molecular weight (Mₚ) of 5 to 50 kg/mol;
each block EP has a molecular weight (Mₚ) of 20 to 100 kg/mol; and
each block S/EB and S/EB' independently has a molecular weight (Mₚ) of 20 to 100 kg/mol.

5. The impact modifier composition of any of claims 1-4, wherein a vinyl content ratio of the block EB and the block EB' is from 1:10 to 10:1.

6. The impact modifier composition of any of claims 1-5, wherein:
the block EB, prior to hydrogenation, has a vinyl content of 5 to 35 wt.%; and
the block EB', prior to hydrogenation, has a vinyl content of 35 to 70 wt.%.

7. The impact modifier composition of any of claims 1-6, wherein the hydrogenated styrenic block copolymer has at least one of:
a polystyrene content of 5 to 30 wt.%;
a molecular weight (Mₚ) of 30 to 300 kg/mol; and
a melt flow rate of > 0.5 dg/min, at 230°C with 2.16 kg load, measured according to ASTM D1238.

8. The impact modifier composition of any of claims 1-7, wherein the hydrogenated styrenic block copolymer has a general configuration selected from: S-EP-EB, EB-S/EB'-EB, and mixtures thereof, having:
a vinyl content in the block EB, prior to hydrogenation, of 10 to 30 wt.%;
a vinyl content in the block EB', prior to hydrogenation, of 35 to 50 wt.%;
a polystyrene content of 4 to 25 wt.%;
a molecular weight (Mₚ) of the block S of 3 to 15 kg/mol;
a molecular weight (Mₚ) of each block EB and EB', independently, of 10 to 40 kg/mol;
a molecular weight (Mₚ) of the block S/EB' of 20 to 60 kg/mol;
a molecular weight (Mₚ) of the block EP of 40 to 60 kg/mol; and
a molecular weight (Mₚ) of the hydrogenated styrenic block copolymer of 35 to 120 kg/mol.

9. The impact modifier composition of any of claims 1-8, wherein the polyolefin plastomer is a copolymer of ethylene and at least one C₃-C₂₀ α-olefin; and wherein the polyolefin plastomer has at least one of:
a density of 0.885 to 0.920 g/cc; and
a melt flow rate of 0.5 to 25 dg/min, at 230°C with 2.16 kg load.

10. The impact modifier composition of any of claims 1-9, wherein the polyolefin plastomer is an ethylene-hexene copolymer comprising 65 to 95 wt.% of ethylene units and 5 to 35 wt.% of hexene units; and wherein the polyolefin plastomer has a density of 0.895 to 0.910 g/cc; a MFR of 0.5 to 5 dg/min, at 230°C with 2.16 kg load; and a long chain branching of < 2 LCB/10⁶ carbons.

11. A thermoplastic polyolefin composition comprising, based on total weight of the thermoplastic polyolefin composition:
(A) 60 to 95 wt.% of a polypropylene;
(B) 5 to 40 wt.% of the impact modifier composition of any of claims 1-10; and
(C) up to 20 wt.% of at least one additive.

12. The thermoplastic polyolefin composition of claim 11, wherein the thermoplastic polyolefin composition when compared to a thermoplastic polyolefin composition in absence of the impact modifier composition of any of claims 1-10, has:
at least 10% increase in an elongation at break, and at least 2% increase in a Notched Izod Impact measured at 21°C; or
at least 10% increase in an elongation at break, and at least 2% increase in a Notched Izod Impact measured at-21°C; or
at least 10% increase in an elongation at break, and less than 20% reduction in a flexural strength; or
at least 10% increase in an elongation at break, and less than 20% reduction in a 1% Secant modulus; and
wherein:
the elongation at break is measured according to ASTM D638;
the Notched Izod Impact is measured according to ASTM D256; and
the flexural strength and 1% Secant modulus, both are measured according to ASTM D790.

13. The thermoplastic polyolefin composition of any of claims 11-12, wherein the polypropylene has at least one of:
a melt flow rate (MFR) of 5 to 50 dg/min, at 230°C with 2.16 kg load; and
a density of 0.890 to 0.920 g/cc.

14. The thermoplastic polyolefin composition of any of claims 11-13, wherein the thermoplastic polyolefin composition has:
a Notched Izod impact at 21°C of > 6.5 kJ/m²; and
a Notched Izod impact at -21°C of > 2.2 kJ/m², measured according to ASTM D256.

15. The thermoplastic polyolefin composition of any of claims 11-14, wherein the thermoplastic polyolefin composition has:
a flexural strength of > 25 MPa;
a 1% secant modulus of > 1050 MPa:
a tensile strength at break of > 10 MPa; and
an elongation at break of > 350%;
wherein:
the flexural strength and the 1% secant modulus, both are measured according to ASTM D790; and
the tensile strength at break and the elongation at break, both are measured according to ASTM D638.
